# FASCICULE DE BREVET EUROPEEN

(11) **EP 2 075 205 B1**
(45) Date de publication et mention de la délivrance du brevet: **25.07.2012**
(21) Numéro de dépôt: 09157329.5
(22) Date de dépôt: 04.05.2007
(51) Int. Cl.: B65G 1/04, A01N 1/02

(54) **Equipement et procédé de distribution de poches de sang**
Einrichtung und Verfahren zum Verteilen von Blutbeuteln
Equipment and method for distributing pouches of blood

(30) Priorité: 15.05.2006 FR 0604282
(43) Date de publication de la demande: 01.07.2009
(62) Demande divisionnaire de: 07290560.7
(73) Titulaire: Etablissement Français du Sang, 93210 La Plaine Saint Denis (FR)
(72) Inventeur: Becquart, Jean-Pierre, 59390 Lys-lez-Lannoy (FR); Dernis, Dominique, 59200 Tourcoing (FR)
(74) Mandataire: Bethenod, Marc

(56) Documents cités:
- DE-A1- 19 716 913

## Description

La présente invention concerne un système de distribution de poches de sang ou produits dérivés vers des rayons d'un magasin de sortie.

Le sang ou produit dérivé prélevé sur un donneur est recueilli dans une poche numérotée qui est stockée en chambre réfrigérée pendant que, en laboratoire, s'effectue un contrôle de qualité et une analyse d'échantillons qui en ont été prélevés.

De façon classique, un opérateur revient dans la chambre réfrigérée pour coller sur la poche une étiquette indiquant le type de son contenu, par exemple du sang, du plasma, un concentré de globules rouges ou encore des plaquettes, ainsi que les caractéristiques de ce contenu, comme par exemple le groupe sanguin. L'étiquette permet alors d'effectuer un tri pour regrouper les poches de même type dans des bacs affectés à chaque type.

Une telle organisation du tri nécessite plusieurs interventions successives de la part d'un opérateur, ce qui limite la cadence de production. En outre, cette pluralité d'interventions humaines risque d'affecter le respect de la continuité de la chaîne du froid.

La présente invention vise à proposer un système permettant de diminuer l'acuité d'au moins l'un des problèmes ci-dessus.

A cet effet, l'invention concerne tout d'abord un équipement de distribution d'une poche de produit sanguin, d'un certain type parmi une pluralité de types possibles, vers une parmi une dite pluralité de zones de stockage en sortie, chacune propre à un type particulier, l'équipement comprenant:
- un système informatique, comportant des moyens mémoires agencés pour recevoir et mémoriser des éléments d'information, de contrôle et de résultats d'analyse relatifs à un échantillon du produit sanguin considéré, afin de constituer un fichier, accessible en lecture, descriptif du dit produit sanguin correspondant à un type de produit, et
- un automate de distribution de la poche, comportant des moyens de lecture du fichier descriptif agencés pour commander des moyens de réception et des moyens de distribution de la poche vers l'une des zones de stockage en sortie, en fonction de données de type de produit lues dans le fichier.

Ainsi, la distribution ou tri de poches successives s'effectue automatiquement, de sorte que l'intervention humaine est réduite, voire disparaît totalement. Le débit peut donc dépasser celui d'un opérateur humain et, en outre, la continuité de la chaîne du froid et sa traçabilité peuvent être assurées.

Une caractéristique importante à relever dans l'invention réside dans le fait que la distribution des poches, avec répartition dans les zones de stockage, s'effectue d'après leur contenu et non par lecture d'une étiquette spécifiant initialement une adresse de destination, comme classiquement pour le courrier ou les colis postaux. L'adressage "par le contenu" selon la présente invention évite en particulier tout risque d'erreur de répartition dans la distribution.

Il est avantageusement prévu des moyens de stockage temporaire des poches dans une zone tampon, en amont de l'automate, qui peut être réfrigérée pour permettre d'attendre les résultats d'analyse. On comprendra toutefois qu'une telle zone tampon ne fait pas partie de l'essence de l'invention, puisque son utilité est liée au délai du laboratoire d'analyse, qui est externe à l'invention.

Pour enchaîner des répartitions successives de poches d'un lot, chaque poche peut être munie d'un identifiant propre, le système informatique étant alors agencé pour repérer le fichier au moyen de l'identifiant. Sinon, le système informatique peut être prévu pour compter les poches reçues et associer à chacune un numéro de rang, ce qui représente une identification par une valeur relative, qui est donc moins sûre que l'identifiant, absolu, évoqué ci-dessus.

De façon préférée, l'équipement comporte un dispositif de fourniture, à chaque poche, d'un support d'informations permettant notamment la détermination du type de produit.

Bien qu'il soit possible d'établir un tableau général de correspondance entre l'identifiant de chaque poche et le type de son contenu qui a été déterminé par l'analyse, il est évidemment plus commode d'éclater un tel tableau en autant de "liges" d'informations de correspondance, chaque ligne étant écrite sur une étiquette ou équivalent physiquement liée à la poche considérée.

Avantageusement, le dispositif de fourniture de support d'informations est agencé pour être inhibé par le système informatique en cas de détection par celui-ci, dans le fichier correspondant, d'un défaut de conformité du produit à une spécification prédéterminée.

Une poche à contenu défectueux sera, avec certitude, bloquée au plus tard dans le circuit de distribution finale puisqu'il lui manquera les informations de type nécessaires à toute utilisation.

Le dispositif de fourniture de support d'information peut être agencé pour inscrire lui-même, sur le support, les dites informations de spécification du type de produit.

Selon une forme de réalisation intéressante, le support d'informations est une étiquette électronique à lecture / écriture par ondes radio, RFID.

L'écriture de l'étiquette peut donc être effectuée par un dispositif électronique ne nécessitant pas la présence d'un opérateur, tout comme d'ailleurs une étiquette classique, c'est-à-dire du genre papier, qui serait éditée et collée par un dispositif d'étiquetage.

Pour assurer un meilleur contrôle de la qualité, le système informatique comporte de préférence des moyens de lecture agencés pour repérer un identifiant de donneur de sang dans l'identifiant de la poche et pour commander des moyens de recherche d'un même identifiant relatif à un dit fichier, établi pour une poche antérieurement analysée, afin d'alimenter des moyens comparateurs agencés pour comparer le fichier établi à un dit fichier en cours d'établissement pour une poche courante, afin de signaler toute discordance entre deux jeux de paramètres déterminés parmi les données des fichiers respectifs.

L'équipement est avantageusement agencé pour recevoir de dits paramètres variables sous la commande d'un utilisateur. L'opérateur peut ainsi adapter le contrôle d'entrée pour, par exemple, adapter des plages de valeurs de paramètres en fonction du donneur particulier, c'est-à-dire en fonction de ses antécédents lus dans un fichier antérieur. On peut ainsi réduire une plage générale de valeurs acceptables d'un paramètre à une plage personnalisée, pour la limiter à des valeurs autour d'une valeur de paramètre mesurée lors d'une analyse antérieure du donneur, ce qui permet de détecter une dérive anormale, même si les valeurs absolues du paramètre restent dans une plage générale acceptable.

L'automate comporte par exemple un convoyeur agencé pour transporter les moyens de stockage temporaire des poches de la zone tampon jusqu'aux moyens de distribution, le convoyeur traversant de préférence un guichet d'étanchéité sanitaire séparant la zone tampon d'une salle contenant les moyens de distribution. Le guichet peut même se présenter sous la forme d'un tunnel, à parois étanches et isothermes, si la zone tampon est distante de l'automate.

L'automate de distribution comporte avantageusement des moyens de contrôle de qualité du contenu des poches, comprenant un capteur optique d'image du produit à travers une zone de paroi transparente de la poche, relié en sortie à des moyens de calcul agencés pour analyser une image reçue d'après des critères définis et pour fournir, le cas échéant, une indication de non-conformité.

Dans une forme de réalisation particulière, les moyens de distribution comportent des moyens de manutention des poches, comprenant un bras mobile de distribution associé à une source de dépression d'air reliée à une ventouse, de préférence plusieurs, en extrémité libre du bras, de préhension de poche et de dépôt de celle-ci dans un parmi une dite pluralité de bacs de zone de stockage.

La manipulation pneumatique limite ainsi le risque de détérioration des poches.

Les moyens de manutention sont avantageusement associés à des moyens de calcul agencés pour tenir à jour une table de remplissage contenant une dite pluralité de niveaux de remplissage des zones de stockage respectives, les moyens de manoeuvre du bras étant agencés pour en déplacer la dite extrémité libre selon en particulier la direction verticale, et les moyens de calcul étant agencés pour commander la descente de l'extrémité libre au-dessus du bac considéré et pour commander, à la source de dépression d'air, une mise à l'évent de la ventouse lorsque celui-ci présente un écart de niveau déterminé par rapport au niveau d'un fond du bac considéré.

Les moyens de calcul peuvent en particulier être agencés pour, d'une part, commander, aux moyens de manoeuvre, un remplissage des bacs ordonné selon un chapelet prédéterminé de positions adjacentes et sur plusieurs couches de poches, et pour, d'autre part, tenir à jour la table de remplissage par des informations de remplissage de chaque couche afin que, lorsque le fond est garni d'un certain nombre de couches de poches, d'épaisseur prédéterminée en position de repos, la valeur du dit écart de niveau par rapport au fond soit accrue d'un même nombre de fois la valeur d'épaisseur de poche.

Les poches vont ainsi toujours être relâchées à une même altitude relative, par rapport au fond nu qui les reçoit ou bien par rapport à la surface supérieure d'une poche d'une couche inférieure. Pour déterminer la valeur de l'écart ci-dessus, les moyens de calcul peuvent par exemple déplacer un curseur ou index informatique qui indique la position d'un front d'onde de remplissage de la couche incomplète. Lorsque ce front d'onde atteint l'extrémité du chapelet de positions offertes dans la couche considérée, il s'agit alors d'accroître l'écart ci-dessus pour conserver la même hauteur de chute par rapport à la nouvelle couche de référence.

Les bacs présentent avantageusement des dispositions relatives telles que leurs distances respectives, par rapport à une position de référence au repos de l'extrémité libre du bras, varient en fonction inverse de fréquences de distribution correspondant à un histogramme des types respectifs de produit antérieurement distribués.

Le trajet moyen d'extrémité libre du bras est ainsi minimal, ce qui permet d'obtenir une cadence de distribution optimale.

Pour effectuer un bilan matière afin de détecter toute erreur dans le fonctionnement global de l'équipement, l'automate peut être agencé pour compter un nombre de poches reçues par les moyens de distribution et pour en décompter un nombre de poches fournies dans les zones de stockage.

L'invention concerne aussi un procédé de distribution d'une poche, contenant un produit sanguin d'un type particulier parmi une pluralité de types possibles, vers une zone particulière de stockage dédiée à un type particulier de dit produit parmi une dite pluralité de zones de stockage, caractérisé par le fait que l'on analyse un échantillon du contenu de la poche à distribuer et que le résultat d'analyse commande la distribution.

La distribution de telles poches représente, de façon générale, un routage par commutation de paquets, dans lequel les paquets à traiter selon le procédé ne comportent pas de champ ou étiquette d'adresse vers une zone de stockage précise. Il s'agit donc, selon l'invention, d'un adressage d'après le contenu (utile) du paquet, qui va donc, en cours du processus d'exécution des étapes du procédé, déterminer la zone de stockage à viser.

Selon un mode de mise en oeuvre avantageux, la poche étant repérée par un identifiant propre :
- on stocke temporairement la poche, à distribuer, dans une zone tampon,
- on effectue la dite analyse d'échantillon et on mémorise le résultat d'analyse, dans une bibliothèque que l'on s'est procurée, en association avec l'identifiant de la poche, afin de constituer ainsi un fichier de poche descriptif du dit produit sanguin correspondant à un type de produit, accessible en lecture,
- on transmet la poche à un automate de distribution de dite poche, et, par lecture de l'identifiant de poche, on adresse le fichier descriptif correspondant de type de produit pour commander la distribution.

L'identifiant propre n'est pas un élément essentiel de l'invention, et il intervient ci-dessus dans une forme de réalisation qui est certes avantageuse mais qui n'est pas obligatoire. En effet, si le problème de rendement n'était pas critique, rien n'interdirait de ne traiter, à tout instant, qu'une seule poche à la fois, qui, une fois distribuée dans l'une des zones de stockage, serait immédiatement prélevée. L'unicité de la poche rendrait alors inutile toute identification de celle-ci lors du déroulement du processus de distribution. On pourrait aussi compter le rang de poches successives. L'invention traite donc essentiellement un problème de distribution, l'identification entre poches d'un même lot pouvant certes être intéressante quant au rendement mais annexe par rapport aux moyens essentiels de l'invention pour résoudre le problème posé de respect de la chaîne du froid.

En pareil cas, il peut être prévu qu'un opérateur, effectuant la dite lecture de l'identifiant de la poche, inscrive, sur un support de données associé à la poche, le type de produit fourni en retour par le fichier descriptif de type en bibliothèque. Le support de données peut en particulier recevoir initialement l'identifiant de la poche.

L'invention concerne enfin un procédé d'optimisation d'un équipement selon l'invention, dans lequel on mémorise un histogramme de pourcentage de chaque type de produit à distribuer et on prévoit une disposition relative des zones de stockage telle que leurs distances respectives, par rapport à une position de référence au repos d'une extrémité d'un bras manipulateur de distribution, varient entre elles en fonction inverse du dit pourcentage.

L'invention sera mieux comprise à l'aide de la description suivante d'un mode préféré de mise en oeuvre du procédé de distribution selon l'invention et d'un équipement de distribution mettant en oeuvre le procédé ainsi qu'un procédé d'optimisation d'un tel équipement, en référence au dessin annexé, selon lequel:
- la figure 1 représente physiquement l'équipement, et
- la figure 2 est un diagramme fonctionnel de l'équipement selon l'invention, ce diagramme illustrant aussi le procédé de distribution selon l'invention.

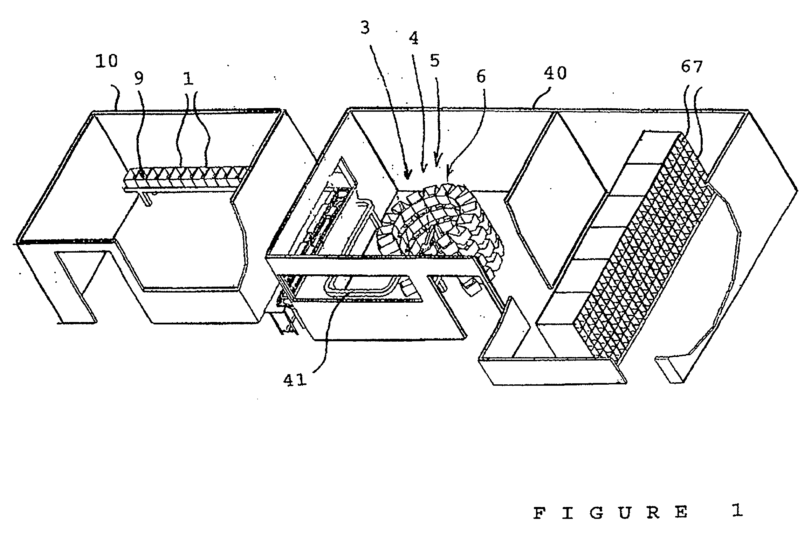

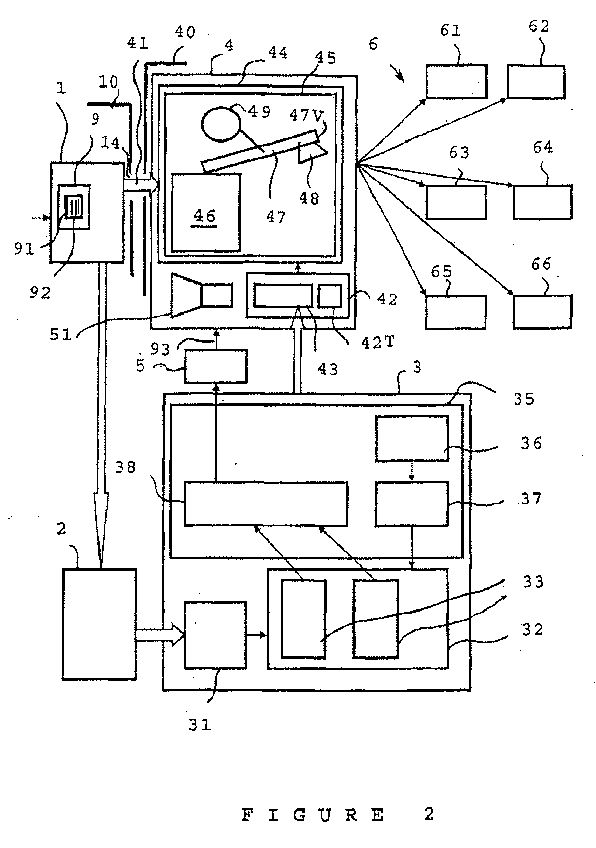

L'équipement représenté sur les figures 1 et 2 est destiné à distribuer des poches 9, de produit sanguin qui a été prélevé sur un donneur, vers diverses sorties possibles, en fonction du type de contenu de la poche 9. Ce produit contenu peut être de divers types parmi une pluralité de types possibles, par exemple du sang brut, du plasma, un concentré de globules rouges ou autre, les opérations correspondantes étant effectuées en amont du présent équipement. Il s'agit donc de diriger chaque poche 9 vers un rayon spécifique de stockage, parmi plusieurs appartenant à un magasin de stockage en sortie et d'expédition, et ceci d'après leur type de contenu pour ensuite les expédier, avec le marquage de type voulu, vers les utilisateurs. Un contrôle de la qualité de chaque prélèvement est en outre ici assuré.

Comme il s'agit ici d'un traitement par lots, chaque poche 9 est repérée par un identifiant propre 91 constitué ici par un mot de code-barre imprimé sur la poche 9, ou sur une étiquette collée sur celle-ci.

L'équipement comporte, en tête, des bacs 1 de stockage temporaire des poches 9 dans une zone tampon formée par salle de stockage 10 réfrigérée par exemple entre 2 et 6 degrés. Les bacs 1 sont disposés sur une bande d'un convoyeur 41 d'alimentation d'un automate 4 de distribution des poches 9 à trier. Pour des raisons pratiques, l'automate 4 proprement dit est situé dans une autre salle, de distribution, référencée 40, réfrigérée de même et reliée à la salle de stockage 10 par un tunnel, à parois étanches et isothermes, muni d'un guichet 14 formant un rideau mobile qui ne s'ouvre que pour le passage d'un bac 1. Deux cellules photoélectriques ou capteurs mécaniques équivalents, non dessinés, détectent respectivement l'arrivée d'un bac 1 devant le guichet 14, pour ouvrir le rideau, et le passage complet du bac 1 par le guichet 14, pour fermer celui-ci.

Pour commander l'automate 4, un système informatique 3 comporte des circuits mémoires constituant une bibliothèque 32 recevant, par des circuits d'entrée 31, et mémorisant, en association avec chaque identifiant de poche 91, des éléments d'information, de contrôle et de résultats d'analyse relatifs à un échantillon du produit sanguin considéré, afin de constituer un fichier 33, accessible en lecture, contenant des éléments d'information descriptifs du produit sanguin correspondant au type du produit de la poche 9 parmi la pluralité de types.

L'analyse du contenu de la poche 9 considérée, portant en fait sur diverses portions d'un échantillon prélevé, pour autant d'analyses particulières, est effectuée dans un laboratoire classique 2, qui ne fait pas partie de l'invention d'équipement elle-même mais qui fournit les données d'analyse qui vont permettre de commander le tri.

L'automate de distribution 4 comporte un ensemble de distribution 44 comportant une mécanique 45 de manutention des poches 9, comprenant des éléments 46 de manoeuvre d'un bras mobile de distribution 47 associé à une source de dépression d'air 49 reliée à une (en pratique quatre) ventouse 48, en extrémité libre 47V du bras 47, de préhension de poche 9 et de dépôt de celle-ci dans une parmi une dite pluralité 6 de zones de stockage, ici des bacs 61, 62, 63, 64, 65 et 66 en sortie, chacun propre à un dit type particulier, en sortie du système. La référence 67 de la figure 1 désigne un ensemble de tiroirs 67 en sortie, pour vider un bac 61-66 respectif lorsqu'il est rempli.

En variante, il peut être prévu que le convoyeur 41 se poursuive en aval, avec divers embranchements de sortie comportant chacun un portillon rotatif, rabattu au repos en une position latérale parallèle à la direction d'extension du convoyeur 41, c'est-à-dire en continuité avec une paroi latérale correspondante, et pouvant être ouvert à 30 ou 45 degrés par exemple pour constituer une glissière latérale venant obstruer le passage du convoyeur 41 afin de capter la poche 9 voulue. Il peut encore être prévu des poussoirs latéraux, ou tiroirs transversaux, qui repoussent la poche 9 dans l'embranchement de sortie approprié.

L'ensemble de distribution 44 est commandé par une unité centrale 42 comportant des circuits 43 de lecture de chaque fichier descriptif 33, afin de commander l'ensemble 44 de distribution des bacs 1 contenant les poches 9 stockées provenant de la salle de stockage temporaire 10, en fonction des éléments d'information, descriptifs du type de produit, lus dans le fichier 33 de la poche 9 considérée.

Le convoyeur 41 transporte périodiquement un bac 1 de la salle de stockage 10 jusqu'à l'ensemble de distribution 44, chaque fois que l'unité centrale 42 a compté un nombre de poches 9 distribuées qui atteint presque un nombre prédéterminé de contenance de chaque bac 1, tout bac 1 vide étant renvoyé par un circuit de retour non dessiné. Pour l'alimentation en bacs 1, le convoyeur 41 traverse un guichet d'étanchéité sanitaire 14 séparant la salle de stockage temporaire 10 de la salle 40, de distribution.

Afin de renseigner l'utilisateur final, il est ici prévu un distributeur 5 d'un support 93 d'informations de spécification du type de produit pour chaque poche 9, c'est-à-dire, d'une façon générale, tout ou partie du fichier 33 considéré, des détails à l'intérieur de chaque type pouvant être indiqués. Le distributeur 5 est ici inhibé par le système informatique 3 en cas de détection par celui-ci, dans le fichier correspondant 33, d'un défaut de conformité du produit à une spécification prédéterminée. Hormis bien évidemment un problème de contamination, il peut par exemple s'agir d'une teneur insuffisante en certaines composantes du produit sanguin considéré.

Le distributeur 5 peut, par exemple, être un simple distributeur d'étiquettes 93 qu'un opérateur va coller ou attacher aux poches 9 respectives, après les avoir renseignées par les données voulues du fichier 33, fournies par l'unité centrale 42 par l'intermédiaire d'un écran d'affichage. Il peut toutefois être prévu que le distributeur 5 inscrive lui-même les informations de spécification du type de produit, sur une étiquette 93, qu'il peut éventuellement coller lui-même, ou directement sur une zone de la poche 9, autre qu'une zone réservée à l'identifiant 91. En variante, le support d'informations 93 est une étiquette électronique à lecture / écriture par ondes radio, RFID, le dispositif 5 comportant donc des circuits radio d'écriture / lecture.

L'automate 4 est aussi prévu pour effectuer un contrôle externe du contenu de chaque poche 9. Il comporte à cet effet un capteur d'image 51 qui saisit une image de ce contenu à travers une zone transparente de la poche 9 et qui la fournit à l'unité centrale 42 pour un contrôle d'aspect par analyse de celle-ci en référence à des images ou critères définis, comme par exemple la couleur ou encore la granulométrie.

Afin de mieux encore contrôler la qualité du produit sanguin, le système informatique 3 comporte une unité centrale 35 comprenant des circuits de lecture 36 pour repérer un identifiant 92 de donneur de sang dans l'identifiant 91 fourni à la bibliothèque 32 et pour commander des circuits 37 de recherche d'un même identifiant 92 relatif à tout autre fichier 33, établi pour une poche 9 antérieurement analysée, afin d'alimenter un comparateur 38 qui va comparer le fichier 33 établi à un fichier 33 en cours d'établissement pour une poche 9 courante, afin de signaler toute discordance entre deux jeux de paramètres déterminés parmi les données des fichiers 33 respectifs. Pour une plus grande souplesse dans l'exploitation ci-dessus, le système informatique 3 est prévu pour recevoir, provenant d'un utilisateur, de dits paramètres mais variables.

Pour gérer les opérations de distribution, l'unité centrale 42 commande les éléments 46 de manoeuvre du bras 47, qui sont agencés pour en déplacer l'extrémité libre 47V dans un plan horizontal, ramené à deux axes X, Y, mais aussi selon la direction verticale Z. Le déplacement en directions X, Y et Z peut être assuré par trois vérins respectivement orientés selon ces directions.

L'unité centrale 42 commande aux vérins la descente de l'extrémité libre 47V au-dessus du bac considéré 61-66 et commande, à la source de dépression d'air 49, une mise à l'évent de la ventouse 48 lorsque celle-ci présente un écart de niveau prédéterminé par rapport au niveau dans le bac considéré 61. Chaque poche 9 est ainsi relâchée à une hauteur prédéterminée et est ainsi posée délicatement. Dans cet exemple, l'unité centrale 42 commande, aux éléments de manoeuvre 46, un remplissage des bacs 61-66 ordonné selon un chapelet prédéterminé de positions adjacentes et sur plusieurs couches de poches 9, c'est-à-dire que les positions dans un plan horizontal, selon les axes X, Y, de relâchement des poches successives suivent une incrémentation, par exemple selon la direction X pour remplir une rangée, avec éventuellement une incrémentation à plus basse fréquence en direction Y pour remplir des rangées voisines.

Par ailleurs, comme il est ici prévu un remplissage sur plusieurs couches, l'unité centrale 42 tient à jour une table 42T de remplissage contenant une dite pluralité de niveaux de remplissage de chaque bac 61-66, et précisément des informations de remplissage de chaque couche, c'est-à-dire le taux de remplissage de la couche supérieure, incomplète. Le fond de chaque bac 61-66 est ainsi progressivement garni d'un certain nombre de couches de poches 9, couches d'épaisseur prédéterminée en position de repos des poches 9, sensiblement à plat, et, lorsqu'une couche est remplie, la valeur de l'écart de niveau par rapport au fond est alors accrue d'un même nombre de fois la valeur d'épaisseur de poche 9.

Pour optimiser la cadence de distribution, les bacs 61-66 présentent des dispositions relatives telles que leurs distances respectives, par rapport à une position de référence au repos de l'extrémité libre 47V du bras 46, varient en fonction inverse de fréquences de distribution correspondant à un histogramme des types respectifs de produit sanguin antérieurement distribués. Sur un lot de poches 9, la distance moyenne de déplacement de l'extrémité libre 47V est ainsi minimale.

Afin de détecter un disfonctionnement, l'unité centrale 42 compte le nombre de poches 9 reçues depuis la salle de stockage temporaire 10 et en décompte un nombre de poches 9 fournies dans les zones de stockage 6, d'où il résulte un bilan matière qui doit être nul en fin de cycle d'utilisation.

On notera que la partie informatique de l'automate 4 peut être située en dehors de la salle de distribution 40. En particulier, la séparation, ici faite, entre le système informatique 3 et l'unité centrale 42 de l'automate 4 a essentiellement un but didactique pour bien mettre en évidence les fonctions de commande de distribution, donc par le système informatique 3, par rapport aux fonctions de commande d'aiguillage pour effectuer la distribution. En pratique, de façon préférée, l'unité centrale 42 est déportée par rapport à l'ensemble de distribution 44 et intégrée avec l'unité centrale 35.

Le procédé selon l'invention consiste donc en une distribution de chaque poche 9 contenant un produit sanguin, d'une pluralité de types, vers une zone particulière de stockage 61-66 dédiée à un type particulier de dit produit parmi une pluralité 6 de zones de stockage 61-66, procédé dans lequel on analyse un échantillon du contenu de la poche 9 à distribuer et le résultat d'analyse commande la distribution, c'est-à-dire détermine l'endroit de destination, en quelque sorte une direction d'aiguillage.

Dans la forme de réalisation exposée ci-dessus à titre d'exemple, la poche 9 étant repérée par un identifiant propre 91 :
- on stocke temporairement chaque poche 9, à distribuer, dans la salle, tampon, de stockage temporaire 10,
- on effectue l'analyse d'échantillon et on mémorise le résultat d'analyse, dans la bibliothèque 32 que l'on s'est procurée, en association avec l'identifiant 91 de la poche 9, afin de constituer ainsi un fichier 33 de poche 9, accessible en lecture, descriptif du produit sanguin correspondant à un type de produit,
- on transmet la poche 9 à l'automate 4 de distribution de poche 9, et, par lecture de l'identifiant 91 de poche, on adresse le fichier 33 descriptif correspondant de type de produit pour commander la distribution.

Comme évoqué plus haut, il peut être prévu qu'un opérateur, effectuant la dite lecture de l'identifiant 91 de la poche 9, inscrive, sur un support de données associé à la poche 9, le type de produit fourni en retour par le fichier 33 descriptif de type en bibliothèque 32, ce support de données recevant éventuellement initialement l'identifiant 91 de la poche 9.

Pour optimiser la conception de l'équipement, il peut être prévu que l'on mémorise un histogramme de pourcentage de chaque type de produit sanguin à trier et on prévoit une disposition relative des zones de stockage 61-66 telle que leurs distances respectives, par rapport à la position de référence au repos de l'extrémité libre 47V du bras manipulateur 47, varient entre elles en fonction inverse du dit pourcentage.

## Revendications

1. Équipement de distribution d'une poche (9) de produit sanguin, d'un certain type parmi une pluralité de types possibles, vers une parmi une dite pluralité de zones de stockage en sortie (61-66), chacune propre à un type particulier, l'équipement comprenant:
- un système informatique (3), comportant des moyens mémoires (32) agencés pour recevoir et mémoriser des éléments d'information, de contrôle et de résultats d'analyse relatifs à un échantillon du produit sanguin considéré, afin de constituer un fichier (33), accessible en lecture, descriptif du dit produit sanguin correspondant à un type de produit, et
- un automate (4) de distribution de la poche (9), comportant des moyens (43) de lecture du fichier descripteur (33) agencés pour commander des moyens de réception (41) et des moyens (44) de distribution de la poche (9) vers l'une des zones de stockage en sortie (61-66), en fonction de données de type de produit lues dans le fichier (33),
et dans lequel il est prévu des moyens (1) de stockage temporaire des poches (9) dans une zone tampon (10), en amont de l'automate (4).

2. Équipement selon la revendication 1, dans lequel, la poche (9) étant munie d'un identifiant propre (91), le système informatique (3) est agencé pour repérer le fichier (33) au moyen de l'identifiant (91).

3. Équipement selon l'une des revendications 1 à 2, comportant un dispositif (5) de fourniture, à la poche (9), d'un support (93) d'informations permettant notamment la détermination du type de produit.

4. Équipement selon la revendication 3, dans lequel le dispositif (5) de fourniture de support d'informations (93) est agencé pour être inhibé par le système informatique (3) en cas de détection par celui-ci, dans le fichier correspondant (33), d'un défaut de conformité du produit à une spécification prédéterminée.

5. Équipement selon l'une des revendications 3 et 4, dans lequel le dispositif (5) de fourniture de support d'informations est agencé pour inscrire lui-même, sur le support (93), les dites informations de détermination du type de produit.

6. Équipement selon l'une des revendications 3 à 5, dans lequel le support d'informations (93) est une étiquette électronique à lecture / écriture par ondes radio, RFID.

7. Équipement selon l'une des revendications 2 à 6, dans lequel le système informatique (3) comporte des moyens de lecture (36) agencés pour repérer un identifiant (92) de donneur de sang dans l'identifiant (91) de la poche (9) et pour commander des moyens (37) de recherche d'un même identifiant (92) relatif à un dit fichier (33), établi pour une poche (9) antérieurement analysée, afin d'alimenter des moyens comparateurs (38) agencés pour comparer le fichier (33) établi à un dit fichier (33) en cours d'établissement pour une poche (9) courante, afin de signaler toute discordance entre deux jeux de paramètres déterminés parmi les données des fichiers (33) respectifs.

8. Équipement selon la revendication 7, dans lequel l'équipement est agencé pour recevoir de dits paramètres variables sous la commande d'un utilisateur.

9. Équipement selon l'une des revendications 1 à 8, dans lequel les moyens de réception comportent un convoyeur (41) agencé pour transporter les moyens de stockage temporaire (1) de la zone tampon (10) jusqu'aux moyens de distribution (44).

10. Équipement selon la revendication 9, dans lequel le convoyeur (41) traverse un guichet d'étanchéité sanitaire (14) séparant la zone tampon (10) d'une salle (40) contenant les moyens de réception (41) et les moyens de distribution (44).

11. Équipement selon l'une des revendications 1 à 10, dans lequel l'automate de distribution (4) comporte des moyens (42, 51) de contrôle de qualité du contenu de la poche (9), comprenant un capteur optique (51) d'image du produit à travers une zone de paroi transparente de la poche (9), relié en sortie à des moyens de calcul (42) agencés pour analyser une image reçue d'après des critères définis et pour fournir, le cas échéant, une indication de non-conformité.

12. Équipement selon l'une des revendications 1 à 11, dans lequel les moyens de distribution (44) comportent des moyens (45) de manutention des poches (9), comprenant des moyens (46) de manoeuvre d'un bras mobile de distribution (47) associé à une source de dépression d'air (49) reliée à une ventouse (48), en extrémité libre (47V) du bras (47), de préhension de poche (9) et de dépôt de celle-ci dans un parmi une dite pluralité de bacs (61-66) de zone de stockage (6).

13. Équipement selon la revendication 12, dans lequel les moyens de manutention (45) sont commandés par des moyens de calcul (42) agencés pour tenir à jour une table de remplissage (42T) contenant une dite pluralité de niveaux de remplissage des zones de stockage respectives (61-66), les moyens de manoeuvre du bras (46) étant agencés pour en déplacer la dite extrémité libre (47V) selon en particulier la direction verticale, et les moyens de calcul (42) étant agencés pour commander la descente de l'extrémité libre (47V) au-dessus du bac considéré (61) et pour commander, à la source de dépression d'air (49), une mise à l'évent de la ventouse (48) lorsque celui-ci présente un écart de niveau prédéterminé par rapport au niveau dans le bac considéré (61).

14. Équipement selon la revendication 13, dans lequel les moyens de calcul (42) sont agencés pour, d'une part, commander, aux moyens de manoeuvre (46), un remplissage des bacs (61-66) ordonné selon un chapelet prédéterminé de positions adjacentes et sur plusieurs couches de poches (9), et pour, d'autre part, tenir à jour la table de remplissage (42T) par des informations de remplissage de chaque couche afin que, lorsque le fond est garni d'un certain nombre de couches de poches (9), d'épaisseur prédéterminée en position de repos, la valeur du dit écart de niveau par rapport au fond soit accrue d'un même nombre de fois la valeur d'épaisseur de poche (9).

15. Équipement selon l'une des revendications 12 à 14, dans lequel les bacs (61-66) présentent des dispositions relatives telles que leurs distances respectives, par rapport à une position de référence au repos de l'extrémité libre (47V) du bras (46), varient en fonction inverse de fréquences de distribution correspondant à un histogramme des types respectifs de produit antérieurement distribués.

16. Équipement selon l'une des revendications 1 à 15, dans lequel l'automate (4) est agencé pour compter un nombre de poches (9) reçues par les moyens de distribution (44) et pour en décompter un nombre de poches (9) fournies dans les zones de stockage (6).

## Claims

1. Equipment for the distribution of a pouch (9) of blood product, of a certain type amongst a plurality of possible types, into one amongst a said plurality of output storage zones (61-66), each one specific to a particular type, the equipment comprising:
- a computer system (3), comprising memory means (32) arranged to receive and memorise elements of information, control, and analysis results relative to a sample of blood product under consideration, in order to constitute a readable file (33) descriptive of said blood product corresponding to a type of product, and
- an automaton (4) for the distribution of the pouch (9), comprising means (43) of reading the descriptive file (33) arranged to control a receiving means (41) and a means (44) for the distribution of the pouch (9) into one of the output storage zones (61-66), according to data about the type of product read in the file (33),
and in which means (1) for temporary storage of the pouches (9) in a buffer zone (10), upstream of the automaton (4), are provided.

2. Equipment according to claim 1, in which, the pouch (9) being equipped with its own identifier (91), the computer system (3) is arranged to detect the file (33) by means of the identifier (91).

3. Equipment according to one of claims 1 to 2, comprising a device (5) for supplying the pouch (9) with a data medium (93) notably enabling the determination of the type of product.

4. Equipment according to claim 3, in which the device (5) for supplying the data medium (93) is arranged to be inhibited by the computer system (3) in the event of detection by the latter, in the corresponding file (33), of a lack of conformity of the product to a predetermined specification.

5. Equipment according to one of claims 3 to 4, in which the device (5) for supplying the data medium is arranged to itself enter said information about the determination of the type of product onto the medium (93).

6. Equipment according to one of claims 3 to 5, in which the data medium (93) is an electronic tag which is read / written by radio waves, RDIF.

7. Equipment according to one of claims 2 to 6, in which the computer system (3) comprises means for reading (36) arranged to detect a blood donor identifier (92) in the identifier (91) of the pouch (9) and to control a means (37) for searching for a same identifier (92) relative to a said file (33), established for a previously analysed pouch (9), in order to supply means of comparison (38) arranged to compare the established file (33) to a said file (33) in the process of being established for a current pouch (9), in order to signal any discordance between two determined parameter sets amongst the data of the respective files (33).

8. Equipment according to claim 7, in which the equipment is arranged to receive said variable parameters under the control of a user.

9. Equipment according to one of claims 1 to 8, in which the receiving means comprise a conveyor (41) arranged to transport the means of temporary storage (1) from the buffer zone (10) to the means for distribution (44).

10. Equipment according to claim 9, in which the conveyor (41) passes through an opening with a sanitary seal (14) separating the buffer zone (10) from a room (40) containing the receiving means (41) and the means for distribution (44).

11. Equipment according to one of claims 1 to 10, in which the automaton for distribution (4) comprises means (42, 51) of quality control of the content of the pouch (9), comprising an optical sensor (51) for capturing an image of the product through a zone of transparent wall of the pouch (9), connected on the output side to a means of calculation (42) arranged to analyse a received image according to the defined criteria and to provide, if necessary, an indication of non-conformity.

12. Equipment according to one of claims 1 to 11, in which the means for distribution (44) comprise means (45) for handling the pouches (9), comprising means (46) for manoeuvring a mobile arm for distribution (47) joined to a vacuum source (49) connected to a suction cup (48), on the free end (47V) of the arm (47), for gripping the pouch (9) and for depositing it into one amongst a said plurality of compartments (61-66) of the storage zone (6).

13. Equipment according to claim 12, in which the handling means (45) are controlled by the means of calculation (42) arranged to update a filling table (42T) containing a said plurality of levels of filling of the respective storage zones (61-66), the means for manoeuvring the arm (46) being arranged to move said free end (47V) in, in particular, the vertical direction, and the means of calculation (42) being arranged to control the descent of the free end (47V) over the compartment under consideration (61) and to control, with the vacuum source (49), a venting of the suction cup (48) when the latter presents a predetermined difference of level relative to the level in the compartment under consideration (61).

14. Equipment according to claim 13, in which the means of calculation (42) are arranged, on the one hand, to control, with the manoeuvring means (46), a filling of the compartments (61-66) governed by a predetermined chain of adjacent positions and on several layers of pouches (9), and, on the other hand, to keep the filling table up-to-date (42T) with filling data for each layer so that, when the bottom is stocked with a certain number of layers of pouches (9), of a predetermined thickness in the rest position, the value of said difference of level relative to the bottom is increased by the same number of times the value of thickness of the pouch (9).

15. Equipment according to one of claims 12 to 14, in which the compartments (61-66) present relative positions such as their respective distances, in relation to a position of reference to the resting free end (47V) of the arm (46), vary in inverse function to the frequencies of distribution corresponding to a histogram of the respective types of product previously distributed.

16. Equipment according to one of claims 1 to 15, in which the automaton (4) is arranged to count a number of pouches (9) received by the means of distribution (44) and to deduct therefrom a number of pouches (9) supplied in the zones of storage (6).

## Patentansprüche

1. Einrichtung zum Verteilen eines Beutels (9) eines Blutproduktes eines bestimmten Typs unter einer Vielzahl möglicher Typen zu einer unter einer genannten Vielzahl von Ausgangslagerzonen (61 - 66), wovon jede einem besonderen Typ entspricht, wobei die Einrichtung Folgendes umfasst:
- ein Informationssystem (3), das Speichermittel (32) umfasst, die angeordnet sind, Informations-, Kontroll- und Analyseergebniselemente in Bezug auf eine Probe des jeweiligen Blutproduktes zu erhalten und zu speichern, um eine lesezugängliche Datei (33) zu bilden, die das Blutprodukt, das einem Produkttyp entspricht, beschreibt, und
- einen Automaten (4) zum Verteilen des Beutels (9), der Mittel (43) zum Lesen der beschreibenden Datei (33) umfasst, die angeordnet sind, Mittel zur Annahme (41) und Mittel (44) zum Verteilen des Beutels (9) zu einer der Ausgangslagerzonen (61 - 66) in Abhängigkeit von den Produkttypendaten, die in der Datei (33) gelesen werden, zu steuern,
und wobei Mittel (1) zum temporären Lagern der Beutel (9) in einer Pufferzone (10) vorgesehen sind, die dem Automaten (4) vorgelagert sind.

2. Einrichtung nach Anspruch 1, wobei, da der Beutel (9) mit einem eigenen Identifikator (91) versehen ist, das Informationssystem (3) angeordnet ist, die Datei (33) mithilfe des Identifikators (91) zu erfassen.

3. Einrichtung nach einem der Ansprüche 1 bis 2, die eine Vorrichtung (5) zum Anbringen eines Informationsträgers (93) umfasst, der insbesondere die Bestimmung des Produkttyps am Beutel (9) ermöglicht.

4. Einrichtung nach Anspruch 3, wobei die Vorrichtung (5) zum Bereitstellen eines Informationsträgers (93) angeordnet ist um, vom Informationssystem (3) im Falle des Erfassens durch Letzteres, in der entsprechenden Datei (33) einer mangelhaftem Übereinstimmung des Produktes mit einer vorausbestimmten Spezifikation gehindert zu werden.

5. Einrichtung nach einem der Ansprüche 3 und 4, wobei die Vorrichtung (5) zum Bereitstellen eines Informationsträgers angeordnet ist, selbst auf den Träger (93) die genannten Informationen zur Bestimmung des Produkttyps einzuschreiben.

6. Einrichtung nach einem der Ansprüche 3 bis 5, wobei der Informationsträger (93) ein mittels Funkwellen lesbares / beschreibbares elektronisches RFID-Etikett ist.

7. Einrichtung nach einem der Ansprüche 2 bis 6, wobei das Informationssystem (3) Lesemittel (36) umfasst, die angeordnet sind, einen Identifikator (92) des Blutspenders im Identifikator (91) des Beutels (9) zu erfassen und Mittel (37) zum Suchen eines gleichen Identifikators (92) in Bezug auf eine Datei (33) zu steuern, die für einen früher analysierten Beutel (9) erstellt wurde, um Vergleichsmittel (38) zu speisen, die angeordnet sind, die erstellte Datei (33) mit einer Datei (33) zu vergleichen, die sich für einen aktuellen Beutel (9) gerade in Erstellung befindet, um jegliche Nichtübereinstimmung zwischen zwei Parametersets zu signalisieren, die unter den Daten der jeweiligen Dateien (33) festgelegt werden.

8. Einrichtung nach Anspruch 7, wobei die Einrichtung angeordnet ist, unter dem Befehl eines Benutzers variable Parameter zu erhalten.

9. Einrichtung nach einem der Ansprüche 1 bis 8, wobei die Mittel zur Annahme ein Förderband (41) umfassen, das angeordnet ist, die Mittel zum temporären Lagern (1) von der Pufferzone (10) bis zu den Mitteln zum Verteilen (44) zu befördern.

10. Einrichtung nach Anspruch 9, wobei das Förderband (41) eine Station mit sanitärer Abdichtung (14) durchläuft, die die Pufferzone (10) von einem Raum (40) trennt, der die Mittel zur Annahme (41) und die Mittel zum Verteilen (44) enthält.

11. Einrichtung nach einem der Ansprüche 1 bis 10, wobei der Automat zum Verteilen (4) Mittel (42, 51) zur Qualitätskontrolle des Inhalts des Beutels (9) umfasst, die einen optischen Sensor (51) für ein Bild des Produktes durch einen transparenten Wandbereich des Beutels (9) umfassen, der ausgangsseitig mit Rechenmitteln (42) verbunden ist, die angeordnet sind, ein Bild zu analysieren, das nach festgelegten Kriterien erhalten wird, und um gegebenenfalls einen Hinweis auf Nichtkonformität zu liefern.

12. Einrichtung nach einem der Ansprüche 1 bis 11, wobei die Mittel zum Verteilen (44) Mittel (45) zum Befördern der Beutel (9) umfassen, die Mittel (46) zum Betätigen eines beweglichen Verteilerarms (47) umfassen, der an eine Luftunterdrucksquelle (49) angeschlossen ist, die mit einem Sauger (48) verbunden ist, der sich am freien Ende (47V) des Arms (47) zum Greifen des Beutels (9) und zum Ablegen desselben in einen unter einer Vielzahl von Behältern (61 - 66) der Lagerzone (6) befindet.

13. Einrichtung nach Anspruch 12, wobei die Mittel zum Befördern (45) von Rechenmitteln (42) gesteuert werden, die angeordnet sind, eine Fülltabelle (42T) aktualisiert zu halten, der eine Vielzahl von Füllniveaus für die jeweiligen Lagerzonen (61 - 66) enthält, wobei die Mittel zum Betätigen des Arms (46) angeordnet sind, um dessen freies Ende (47V) gemäß insbesondere der vertikalen Richtung zu bewegen, und wobei die Rechenmittel (42) angeordnet sind, das Absenken des freien Endes (47V) über dem betroffenen Behälter (61) zu steuern und um der Luftunterdrucksquelle (49) ein Ausblasen des Saugers (48) zu befehlen, wenn dieser einen vorausbestimmten Niveauunterschied zu einem Niveau im betroffenen Behälter (61) aufweist.

14. Einrichtung nach Anspruch 13, wobei die Rechenmittel (42) angeordnet sind, einerseits den Betätigungsmitteln (46) eine Füllung der Behälter (61 - 66) zu befehlen, die gemäß einer vorausbestimmten Aneinanderreihung von nebeneinander liegenden Positionen und über mehrere Lagen von Beuteln (9) angewiesen wird, und um andererseits die Fülltabelle (42T) mittels Füllinformationen von jeder Lage aktualisiert zu halten, damit, wenn der Boden mit einer bestimmten Anzahl von Lagen von Beuteln (9) mit einer vorausbestimmten Dicke in Ruheposition bedeckt ist, der Wert des Niveauunterschieds zum Boden um die gleiche Anzahl multipliziert mit dem Wert der Dicke der Beuteln (9) erhöht wird.

15. Einrichtung nach einem der Ansprüche 12 bis 14, wobei die Behälter (61 - 66) relative Anordnungen aufweisen, so wie sich ihre jeweiligen Abstände in Bezug auf eine Referenzposition bei Ruhestellung des freien Endes (47V) des Arms (46) ändern, und zwar in umgekehrter Abhängigkeit von den Verteilungshäufigkeiten entsprechend einem Histogramm der jeweiligen früher verteilten Produkttypen.

16. Einrichtung nach einem der Ansprüche 1 bis 15, wobei der Automat (4) angeordnet ist, eine Anzahl von Beuteln (9) zu zählen, die von den Mitteln zum Verteilen (44) angenommen werden und um davon eine Anzahl von Beuteln (9) abzuziehen, die in die Lagerzonen (6) ausgegeben werden.
